# EUROPÄISCHE PATENTSCHRIFT

(11) **EP 1 558 967 B1**
(45) Veröffentlichungstag und Bekanntmachung des Hinweises auf die Patenterteilung: **26.04.2006**
(21) Anmeldenummer: 04714284.9
(22) Anmeldetag: 25.02.2004
(51) Int. Cl.: G02F 1/383

(54) **ERZEUGUNG ABSTIMMBARER PICOSEKUNDEN LICHTIMPULSE IM SICHTBAREN SPEKTRALBEREICH**
PRODUCTION OF TUNEABLE PICOSECOND LIGHT IMPULSES IN A VISIBLE SPECTRAL RANGE
PRODUCTION D'IMPULSIONS LUMINEUSES, DE L'ORDRE DE LA PICOSECONDE, ACCORDABLES DANS LA PLAGE SPECTRALE VISIBLE

(30) Priorität: 25.02.2003 DE 10308249
(43) Veröffentlichungstag der Anmeldung: 03.08.2005
(73) Patentinhaber: TOPTICA Photonics AG, 82166 Gräfelfing (DE)
(72) Erfinder: TAUSER, Florian, 80798 München (DE); LEITENSTORFER, Alfred, 78465 Konstanz (DE); LISON, Frank, 82131 Gauting (DE)
(74) Vertreter: Isfort, Olaf
(86) Internationale Anmeldenummer: PCT/EP2004/001855
(87) Internationale Veröffentlichungsnummer: WO 2004/077142

(56) Entgegenhaltungen:
- HERRMANN J ET AL: "Experimental evidence for supercontinuum generation by fission of higher-order solitons in photonic fibers" PHYSICAL REVIEW LETTERS, Bd. 88, Nr. 17, 29. März 2002 (2002-03-29), Seiten 173901-1-173901-4, XP002290713 ISSN: 0031-9007
- HUSAKOU A V ET AL: "Supercontinuum generation of higher-order solitons by fission in photonic crystal fibers" PHYSICAL REVIEW LETTERS, Bd. 87, Nr. 20, 12. November 2001 (2001-11-12), Seiten 203901-1-203901-4, XP002290714 ISSN: 0031-9007
- RAOULT F ET AL: "Efficient generation of narrow-bandwidth picosecond pulses by frequency doubling of femtosecond chirped pulses" OPTICS LETTERS, Bd. 23, Nr. 14, 15. Juli 1998 (1998-07-15), Seiten 1117-1119, XP002290715 ISSN: 0146-9592
- TAUSER F, ADLER F, LEITENSTORFER A: "Widely tunable sub-30-fs pulses from a compact erbium-doped fiber source" OPTICS LETTERS, Bd. 29, Nr. 5, 1. März 2004 (2004-03-01), Seiten 516-518, XP002290716

## Beschreibung

Die Erfindung betrifft eine Vorrichtung zur Erzeugung von Lichtimpulsen im sichtbaren Spektralbereich, mit einem Lasersystem, das Femtosekunden-Lichtimpulse, das heißt Lichtimpulse mit einer Dauer von bis zu 1 ps, im infraroten Spektralbereich emittiert, wobei die Wellenlänge der von dem Lasersystem emittierten Lichtimpulse abstimmbar ist, und mit einem optischen Frequenzkonverter zur Konversion der Wellenlänge der Lichtimpulse in den sichtbaren Spektralbereich.

Lasersysteme, die in der Lage sind, Femtosekunden-Lichtimpulse zu erzeugen, werden in der physikalischen Grundlagenforschung und auch in anderen Forschungsgebieten zunehmend angewendet. Mit derartigen Lasersystemen können schnelle physikalische, chemische und biologische Prozesse quasi in "Echtzeit" beobachtet werden. Kommerzielle Einsatzfelder für Femtosekunden-Lichtimpulse erzeugende Lasersysteme bestehen auf den Gebieten der Materialuntersuchung und -bearbeitung, auf dem Gebiet der Medizin sowie auf dem so genannten "Life-Science"-Gebiet. Als konkrete Anwendungen sind die Multi-Photonen-Mikroskopie sowie die optische Kohärenz-Tomographie beispielhaft zu nennen.

In der jüngeren Vergangenheit hat sich außerdem die so genannte zeitaufgelöste Fluoreszenzspektroskopie zu einer wichtigen Untersuchungsmethode auf dem Gebiet der Chemie, der Biochemie, der physikalischen Chemie und auch der Halbleitertechnologie entwickelt. Bei der zeitaufgelösten Fluoreszenzspektroskopie wird in der Regel die Lebensdauer eines angeregten Zustands eines verwendeten Fluorophors bestimmt. Dies ist die mittlere Zeit, die ein einzelnes Fluorophor-Molekül im angeregten Zustand verbringt, bevor es unter Abstrahlung eines Fluoreszenzphotons in den Grundzustand zurückkehrt. Die Lebensdauer ist spezifisch für das jeweilige Fluorophor und seine lokale Umgebung, sodass die Fluorophor-Moleküle gewissermaßen als Sonden zur Untersuchung der interessierenden mikroskopischen Prozesse eingesetzt werden. Anhand unterschiedlicher Lebensdauern ist es beispielsweise auch möglich, zwei oder mehr verschiedene Fluorophore mit überlappenden optischen Absorptions- und Emissionsspektren zu unterscheiden, wodurch die Anwendungsmöglichkeiten weiter verbessert werden. Derartige Untersuchungen kommen beispielsweise bei der automatisierten Wirkstoffsuche (HTS engl. "high throughput screening") zum Einsatz.

Als so genannte Marker werden bei der zeitaufgelösten Fluoreszenzspektroskopie derzeit zumeist Fluorophore eingesetzt, deren Lebensdauer im Bereich zwischen einigen 100 ps und wenigen 100 ns. Eine kurze Lebensdauer ist in der Regel von Vorteil, da durch wiederholte Messung und Mittelung ein geringes Signalrauschen erreicht werden kann. Gleichzeitig ergeben sich aus der kurzen Lebensdauer hohe Anforderungen an die Impulslänge von zur Anregung der Fluorophore eingestrahlten Lichtimpulsen. Die Impulslänge muss auf jeden Fall kurz gegenüber der Lebensdauer der Fluorophore sein. Zu beachten ist außerdem, dass die Anregungsspektren der in der Praxis in Frage kommenden Fluorophore im Wesentlichen im sichtbaren Spektralbereich liegen. Die Zahl der bei bestimmten Untersuchungsobjekten für die zeitaufgelöste Fluoreszenzspektroskopie verwendbaren Fluorophore ist in der Regel durch das experimentelle Umfeld und durch die spezifischen Wechselwirkungen mit dem Untersuchungsobjekt stark begrenzt, sodass sich Einschränkungen hinsichtlich der Wellenlänge der Lichtimpulse ergeben.

Eine Vorrichtung der eingangs genannten Art ist aus dem Stand der Technik (Herrmann et al., "Experimental evidence for super continuum generation by fission of higher-order solitons in photonic fibers", Applied Physics Letters 88 (17), 173.901/1 bis 173.901/4, 2002) bekannt. Bei der vorbekannten Vorrichtung wird mittels einer photonischen Kristallfaser aus Femtosekunden-Lichtimpulsen eines Titan-Saphir-Lasers ein breitbandiges, sogenanntes Superkontinuum erzeugt. Das Titan-Saphir-Lasersystem ist bei der vorbekannten Vorrichtung zwar (schmalbandig) abstimmbar. Nachteiligerweise überträgt sich diese Abstimmbarkeit aber nicht in den sichtbaren Spektralbereich des Superkontinuums. Dies hat zur Folge, dass die vorbekannte Vorrichtung nicht zur Erzeugung von im sichtbaren Spektralbereich abstimmbaren Lichtimpulsen geeignet ist. Dementsprechend eingeschränkt ist die Anwendungsmöglichkeit des vorbekannten Lasersystems für die zeitaufgelöste Fluoreszenzspektroskopie.

Davon ausgehend liegt der vorliegenden Erfindung die Aufgabe zugrunde, eine Lichtquelle, insbesondere für die zeitaufgelöste Fluoreszenzspektroskopie, bereitzustellen, die Lichtimpulse mit einer Impulsdauer im Pikosekundenbereich liefert, wobei die Wellenlänge der Lichtimpulse im Wesentlichen über den gesamten sichtbaren Spektralbereich abstimmbar sein soll.

Diese Aufgabe löst die vorliegende Erfindung ausgehend von einer Vorrichtung der eingangs genannten Art dadurch, dass die Konversion der Wellenlänge der Lichtimpulse mittels des Frequenzkonverters derart erfolgt, dass die Wellenlänge der Lichtimpulse im sichtbaren Spektralbereich abstimmbar ist, wobei ein optischer Strecker vorgesehen ist, mittels welchem die Impulsdauer der frequenzkonvertierten Lichtimpulse auf mindestens 1 ps vergrößerbar ist.

Gemäß der Erfindung werden also mittels eines geeigneten Lasersystems zunächst Femtosekunden-Lichtimpulse im infraroten Spektralbereich erzeugt, die eine ausreichend hohe Impulsenergie (Größenordnung Nanojoule) haben, sodass die Wellenlänge der Lichtimpulse mittels eines Frequenzkonverters in an sich bekannter Art unter Ausnutzung entsprechender nichtlinearer optischer Effekte in den gewünschten sichtbaren Spektralbereich konvertierbar ist. Die frequenzkonvertierten Lichtimpulse werden dann gemäß der Erfindung mittels eines optischen Streckers auf die gewünschte Impulsdauer von bis zu 1000 ps gebracht. Für die zeitaufgelöste Fluoreszenzspektroskopie werden Lichtimpulse mit einer Impulsdauer im Bereich von 1 ps bis zu 1000 ps benötigt. Für die meisten Anwendungen sind Lichtimpulse mit einer Impulsdauer im Bereich zwischen 10 und 100 ps erforderlich. Die Wiederholungsrate der Lichtimpulse sollte im Bereich von bis zu 250 MHz liegen.

Die erfindungsgemäße Vorrichtung eignet sich selbstverständlich auch als abstimmbare Lichtquelle, die quasi-kontinuierliches Laserlicht für die normale, d.h. nicht zeitaufgelöste Fluoreszenzspektroskopie liefert.

Der gemäß der Erfindung eingesetzte Frequenzkonverter kann einen oder mehrere Frequenzverdoppler üblicher Art umfassen. Als Frequenzverdoppler können z. B. kommerziell erhältliche SHG-Kristalle (engl. "second harmonic generation") oder auch so genannte periodisch gepolte Kristalle oder geeignete Wellenleiterstrukturen zum Einsatz kommen.

Außerdem kann bei der erfindungsgemäßen Vorrichtung ein optisches Frequenzfilter vorgesehen sein, das dem Frequenzkonverter entweder vor- oder nachgeschaltet ist. Das je nach Anwendungsfall verwendete nichtlineare optische Element zur Frequenzkonversion der Lichtimpulse in den sichtbaren Spektralbereich kann außerdem die Funktion des optischen Streckers und des Frequenzfilters erfüllen. Aufgrund der für die Frequenzverdopplung einzuhaltenden Phasenanpassungsbedingungen erfolgt die Frequenzkonversion in der Regel schmalbandig, was einer spektralen Filterung des frequenzkonvertierten Lichtes gleichkommt. Aufgrund der Schmalbandigkeit ergibt sich in den meisten Fällen auch eine zeitliche Streckung der Lichtimpulse.

In Abhängigkeit von dem verwendeten nichtlinearen optischen Element zur Frequenzkonversion muss dementsprechend bei der erfindungsgemäßen Vorrichtung nicht unbedingt ein separates optisches Element vorgesehen sein, das die Funktion des optischen Streckers erfüllt.

Zweckmäßigerweise sollte die Wellenlänge der von dem Lasersystem emittierten Lichtimpulse in einem ausreichend großen Bereich, nach Möglichkeit wenigstens zwischen 1 µm und 2 µm abstimmbar sein, damit sich eine ausreichend große Abstimmbarkeit, nach Möglichkeit im gesamten sichtbaren Spektralbereich, für die frequenzkonvertierten Lichtimpulse ergibt. Idealerweise ist das Lasersystem so weit abstimmbar, dass durch Frequenzkonversion gemäß der Erfindung der gesamte sichtbare Spektralbereich zuzüglich des daran angrenzenden ultravioletten (UV) und nahen infraroten (NIR) Spektralbereichs abgedeckt werden kann. Falls gemäß der Erfindung als Frequenzkonverter ein einfacher Frequenzverdoppler verwendet wird, ergibt sich bei einer Abstimmbarkeit der Wellenlänge der von dem Lasersystem emittierten Lichtimpulse zwischen 800 nm und 2 µm beispielsweise eine spektrale Abdeckung am Ausgang der erfindungsgemäßen Vorrichtung zwischen 400 nm und 1 µm, sodass nahezu der vollständige sichtbare Spektralbereich einschließlich des nahen infraroten Spektralbereichs abgedeckt ist.

Der optische Strecker der erfindungsgemäßen Vorrichtung kann zweckmäßigerweise durch wenigstens ein dispersives optisches Element gebildet werden, das dem Frequenzkonverter nachgeschaltet ist. Der optische Strecker kann auch mehrstufig ausgebildet sein und beispielsweise aus einem Glasstab bestehen, dem eine dispersive Glasfaser nachgeschaltet ist. In der ersten Stufe kann eine Vergrößerung der Impulsdauer der frequenzkonvertierten Lichtimpulse von ca. 100 fs auf ca. 1 ps erfolgen, während in der zweiten Stufe die Impulsdauer weiter von 1 ps auf die gewünschten 10 bis 100 ps vergrößert wird. Insgesamt sollte für die zeitaufgelöste Frequenzspektroskopie die Impulsdauer der frequenzkonvertierten Lichtimpulse in dem genannten Bereich justierbar sei. Dabei ist zu berücksichtigen, dass für die zeitaufgelöste Fluoreszenzspektroskopie in der Regel eine mittlere spektrale Leistungsdichte von mehr als 1 mW pro Nanometer, vorzugsweise mehr als 10 mW pro Nanometer benötigt wird.

Gemäß der Erfindung ist ein Lasersystem erforderlich, das sowohl leistungsstarke als auch spektral variable Lichtimpulse im infraroten Spektralbereich emittiert. Dieses Lasersystem sollte, insbesondere für die Anwendung auf dem Gebiet der zeitaufgelösten Fluoreszenzspektroskopie, kostengünstig und einfach bedienbar sein.

Bisher wurden Femtosekunden-Lichtimpulse hoher Leistung im Labor üblicherweise mittels Titan-Saphir-Lasersystemen erzeugt. Diese Systeme sind nachteiligerweise sehr teuer, justageaufwendig und umständlich in der Handhabung. Auch ist die Durchstimmbarkeit des optischen Spektrums der erzeugten Lichtimpulse bei solchen Lasersystemen nicht zufrieden stellend.

Heutzutage geht man dazu über, Femtosekunden-Lichtimpulse mit lmputsenergien von einem Nanojoule und mehr mittels rein faserbasierten Lasersystemen zu erzeugen. Derartige Systeme bestehen üblicherweise aus einer gepulsten Laserlichtquelle, die Femtosekunden-Lichtimpulse im Energiebereich von 100 Pikojoule emittieren. Diese Lichtimpulse werden dann mittels einer optisch gepumpten Verstärkerfaser verstärkt, sodass die Lichtimpulse im gewünschten lmpulsenergiebereich zur Verfügung stehen.

Beispielsweise aus der EP 1 118 904 A1 ist eine Vorrichtung zur Erzeugung abstimmbarer Lichtimpulse vorbekannt. Die bekannte Vorrichtung arbeitet mit einer speziellen nichtlinearen optischen Faser, mittels welcher das optische Spektrum von Femtosekunden-Lichtimpulsen, die von einer geeigneten gepulsten Laserlichtquelle geliefert werden, unter Ausnutzung solitonischer Effekte und des Raman-Effekts gezielt modifiziert werden kann. Zur Variation des Spektrums der erzeugten Lichtimpulse wird bei dem in der genannten Druckschrift beschriebenen System die Intensität des in die nichtlineare optische Faser eingekoppelten Lichts variiert. Daraus ergibt sich unmittelbar der Nachteil, dass bei dem vorbekannten System das gewünschte optische Spektrum der erzeugten Lichtimpulse von der Impulsenergie abhängt. Eine unabhängige Variation der Impulsenergie und der Wellenlänge der Lichtimpulse ist dementsprechend mit dem vorbekannten System nicht möglich. Ein weiterer Nachteil besteht darin, dass bei dem vorbekannten System die eingesetzte nichtlineare optische Faser eine Länge von mehreren 10 m aufweisen muss, damit der gewünschte Raman-Effekt in ausreichendem Maße wirksam wird. Durch die lange Laufstrecke kann es zu einem unerwünschten Kohärenzverlust der erzeugten Lichtimpulse kommen.

Zur Vermeidung der skizzierten Nachteile kann bei der erfindungsgemäßen Vorrichtung ein Lasersystem zum Einsatz kommen, das zur Erzeugung der abstimmbaren Lichtimpulse eine nichtlineare optische Faser aufweist, mittels welcher das optische Spektrum von Femtosekunden-Lichtimpulsen unter Ausnutzung rein solitonischer Effekte modifizierbar ist, wobei der nichtlinearen optischen Faser ein optischer Kompressor vorgeschaltet ist.

Wie sich zeigt, führen nichtlineare Prozesse in der Faser, in welche die Lichtimpulse bei dem Lasersystem der erfindungsgemäßen Vorrichtung eingekoppelt werden, dazu, dass sich in der Faser zwei separate Lichtimpulse ausbilden, deren Spektrum gegenüber demjenigen des eingekoppelten Lichtimpuls zum langwelligen bzw. kurzwelligen Spektralbereich hin verschoben ist. Dabei ist die spektrale Trennung der Lichtimpulse mittels des optischen Kompressors, der der nichtlinearen optischen Faser bei der erfindungsgemäßen Vorrichtung vorgeschaltet ist, einstellbar. Durch den optischen Kompressor wird das zeitliche Frequenzverhalten (engl. "chirp") der eingekoppelten Lichtimpulse gezielt beeinflusst. Das mittels der nichtlinearen optischen Faser modifizierte optische Spektrum hängt dann empfindlich von dem vorgegebenen "chirp" ab, sodass die gewünschte Abstimmbarkeit der Lichtimpulse gegeben ist. Vorteilhaft ist insbesondere, dass das optische Spektrum der mittels der erfindungsgemäßen Vorrichtung erzeugten Lichtimpulse unabhängig von der Impulsenergie variiert werden kann.

Bei Experimenten hat sich gezeigt, dass das Lasersystem der erfindungsgemäßen Vorrichtung vorteilhafterweise mit einer sehr kurzen nichtlinearen optischen Faser mit einer Länge von nur wenigen Zentimetern zur gewünschten Modifikation des optischen Spektrums der Lichtimpulse auskommt. Dadurch werden Kohärenzveriuste der erzeugten Lichtimpulse wirksam vermieden.

Die in die nichtlineare optische Faser des Lasersystems eingekoppelten Lichtimpulse sollten eine Impulsenergie von wenigstens einem Nanojoule haben. Derartig hohe lmpulsenergien sind wünschenswert, damit die solitonischen optischen Effekte zur Erzeugung der abstimmbaren Lichtimpulse innerhalb der nichtlinearen optischen Faser im erforderlichen Maße auftreten.

Sinnvollerweise sollte der optische Kompressor des Lasersystems der erfindungsgemäßen Vorrichtung verstellbar ausgebildet sein, derart, dass der zeitliche Frequenzvertauf der in die nichtlineare optische Faser eingekoppelten Lichtimpulse veränderbar ist. Dies ermöglicht es auf komfortable und einfache Weise, die erzeugten Lichtimpulse auf die gewünschten Wellenlängen abzustimmen, indem die verstellbaren Elemente des optischen Kompressors, wie beispielsweise Prismen oder optische Gitter, in geeigneter Weise justiert werden.

Gemäß einer vorteilhaften Ausgestaltung der erfindungsgemäßen Vorrichtung ist die nichtlineare optische Faser polarisationserhaltend und dispersionsverschoben ausgebildet. Eine derartige Faser ist beispielsweise in dem Artikel von T. Okuno et al. in der Zeitschrift IEEE Joumal of Selected Topics of Quantum Electronics, Bd. 5, S. 1385, 1999, beschrieben. Die erwähnten solitonischen optischen Effekte, die zur gewünschten Modifikation des Spektrums der Lichtimpulse gemäß der Erfindung führen, treten in der nichtlinearen optischen Faser auf, wenn die Wellenlänge der in die Faser eingekoppelten Lichtimpulse im Bereich der Nulldispersions-Wellenlänge der Faser liegt. Bei Experimenten wurde zur Erzeugung der abstimmbaren Lichtimpulse eine nichtlineare optische Faser eingesetzt, deren Nulldispersions-Wellenlänge im Bereich von 1,52 µm liegt.

Lichtimpulse mit einem besonders breiten optischen Spektrum können mit dem Lasersystem der erfindungsgemäßen Vorrichtung erzeugt werden, wenn die nichtlineare optische Faser einen besonders kleinen Kerndurchmesser von ≤ 5 µm hat. Bei Experimenten wurde eine Faser mit einem Kerndurchmesser von 3,7 µm erfolgreich eingesetzt, wobei eine Faserlänge von nur 7 cm sich als ausreichend erwiesen hat. Damit ergibt sich ein nutzbarer Wellenlängenbereich zur Abstimmung der Lichtimpulse, der sich von etwa 1,1 µm bis 2,0 µm erstreckt.

Neben herkömmlichen optischen Glasfasern können gemäß der Erfindung auch mikrostrukturierte photonische Fasern als nichtlineare optische Faser zur Erzeugung der abstimmbaren Lichtimpulse verwendet werden. Derartige Fasern weisen im Bereich des Kerns eine transversale Mikrostruktur auf. Durch geeignete Anpassung der Nulldispersions-Wellenlänge sowie durch geringe Kerndurchmesser und somit hohe Nichtlinearität solcher Kristallfasern ist die Erzeugung weit abstimmbarer Lichtimpulse gemäß der Erfindung möglich.

Optional kann bei dem Lasersystem der erfindungsgemäßen Vorrichtung der nichtlinearen optischen Faser ein zusätzlicher optischer Kompressor nachgeschaltet sein, um am Ausgang des Lasersystems Lichtimpulse mit einer minimalen Impulsdauer zu erzielen. Bei Experimenten hat sich der Einsatz eines Prismen-Kompressors unter Verwendung von Prismen aus SF10-Glas bewährt. Damit ließen sich lmpulsdauern von ≤ 25 fs erzielen.

Ausführungsbeispiele der Erfindung werden im Folgenden anhand der Figuren erläutert. Es zeigen:
- Fig. 1: Darstellung der erfindungsgemäßen Vorrichtung als Blockdiagramm;
- Fig. 2: Lasersystem der erfindungsgemäßen Vorrichtung.

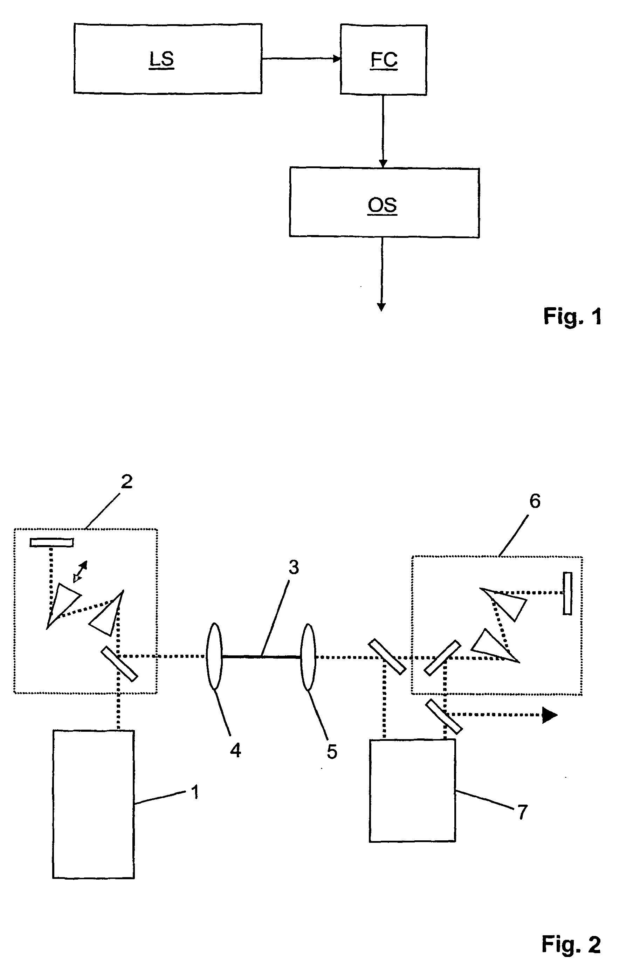

Die in der Fig. 1 dargestellte Vorrichtung besteht aus einem Lasersystem LS, das Femtosekunden-Lichtimpulse im infraroten Spektralbereich emittiert. Diese Lichtimpulse werden einem optischen Frequenzkonverter FC zugeführt, bei welchem es sich beispielsweise um einen Frequenzverdoppler-Kristall ansich bekannter Art handeln kann. Die frequenzkonvertierten Lichtimpulse werden einem optischen Strecker OS zugeführt, mittels welchem die Impulsdauer der frequenzkonvertierten Lichtimpulse auf mindestens 1 ps vergrößerbar ist. Dem Frequenzkonverter FC kann, je nach Bedarf, ein in der Fig. 1 nicht näher dargestelltes optisches Frequenzfilter vor- oder nachgeschaltet sein, um je nach Anwendungsfall unerwünschte spektrale Anteile im optischen Spektrum der Lichtimpulse eliminieren zu können. Gemäß der Erfindung ist die Wellenlänge der von dem Lasersystem LS emittierten Lichtimpulse abstimmbar. Dabei sollte eine Abstimmbarkeit zwischen 1 µm und 2 µm, nach Möglichkeit sogar zwischen 800 nm und 2 µm, gewährleistet sein, damit am Ausgang der in der Fig. 1 dargestellten Vorrichtung Lichtimpulse zur Verfügung stehen, die im Wesentlichen über den gesamten sichtbaren Spektralbereich abstimmbar sind. Bei dem optischen Strecker OS kann es sich um ein beliebiges dispersives optisches Element, wie beispielsweise einen Glasstab oder eine optische Faser mit geeigneter Dispersion oder um einen mehrstufigen Aufbau aus solchen Elementen, handeln.

Die Fig. 2 zeigt schematisch den Aufbau des Lasersystems LS der in der Fig. 1 dargestellten Vorrichtung. Dabei ist eine gepulste Laserlichtquelle 1 vorgesehen, welche Femtosekunden-Lichtimpulse mit einer Impulsenergie von mehr als einem Nanojoule emittiert. Bei der Laserlichtquelle 1 kann es sich vorteilhafterweise um ein vollständig faserbasiertes System handeln, das aus einem kommerziell erhältlichen gepulsten Faserlaser und einer diesem nachgeschalteten optischen gepumpten Verstärkerfaser zusammengesetzt ist. Der Einsatz üblicher Freistrahllaser als Laserlichtquelle 1 ist aber auch möglich. Der zeitliche Frequenzverlauf der von der Laserlichtquelle 1 emittierten Lichtimpulse wird mittels eines Prismenkompressors 2 gezielt vorgegeben. Bei dem dargestellten Ausführungsbeispiel wird zu diesem Zweck die Prismenanordnung von den Lichtimpulsen zweifach durchlaufen. Durch den Doppelpfeil ist angedeutet, dass eines der Prismen des Kompressors verstellbar ist, um dadurch gemäß der Erfindung die erzeugten Lichtimpulse abstimmen zu können. Dem Prismenkompressor 2 ist eine nichtlineare dispersionsverschobene und polarisationserhaltende optische Faser 3 nachgeschaltet, in welche das Licht mittels einer Linse 4 eingekoppelt wird. Die in die Faser 3 eingekoppelten Lichtimpulse haben eine Wellenlänge, die der Nulldispersions-Wellenlänge der optischen Faser 3 im Wesentlichen entspricht. Aufgrund in der Faser 3 auftretender nichtlinearer solitonischer Effekte wird das optische Spektrum der Lichtimpulse stark modifiziert. Die aus der optischen Faser 3 austretenden Lichtimpulse, die mittels einer weiteren Linse 5 ausgekoppelt werden, haben ein optisches Spektrum, das empfindlich von dem mittels des Kompressors 2 vorgegebenen "chirp" abhängt. Durch Verstellung des entsprechenden Prismas in dem Kompressors 2 können die aus der Faser 3 austretenden Lichtimpulse im infraroten Wellenlängenbereich zwischen 1,1 µm und 2,0 µm verstellt werden. Wie oben beschrieben, weist das optische Spektrum der Lichtimpulse am Ausgang der Faser 3 zwei separate Komponenten auf, die gegenüber der Wellenlänge des eingekoppelten Lichtimpulses zum langwelligen bzw. kurzwelligen Spektralbereich hin verschoben sind. Eine verstellbare spektrale Trennung der beiden Komponenten von mehr als 100 THz ist mit dem dargestellten Aufbau realisierbar. Auch wenn gemäß der Erfindung eine kurze nichtlineare optische Faser 3, die eine Länge von ≤ 10 cm haben kann, ausreichend ist, kommt es zu einem dispersiven Auseinanderlaufen der Lichtimpulse innerhalb der Faser 3.

Dies kann durch einen zusätzlichen Prismenkompressor 6 kompensiert werden. Bei der Verwendung von SF10-Glasprismen wurden mit dem in der Zeichnung dargestellten Aufbau abstimmbare Lichtimpulse mit einer Impulsdauer von ≤ 25 fs realisiert. Zur Charakterisierung der Lichtimpulse ist ein FROG-Aufbau oder ein Spektrometer 7 vorgesehen.

Es ist darauf hinzuweisen, dass zur gezielten Einstellung des "chirps" der in die Faser 3 eingekoppelten Lichtimpulse statt des Prismenkompressors 2 auch andere dispersive optische Komponenten eingesetzt werden können, wie beispielsweise Gitterkompressoren, so genannte "gechirpte" Spiegel, Faser-Bragg-Gitter, zusätzliche dispersive optische Wegstrecken usw.

## Patentansprüche

1. Vorrichtung zur Erzeugung von Lichtimpulsen im sichtbaren Spektralbereich, mit einem Lasersystem (LS), das Femtosekunden-Lichtimpulse, das heißt Lichtimpulse mit einer Dauer von bis zu 1 ps, im infraroten Spektralbereich emittiert, wobei die Wellenlänge der von dem Lasersystem (LS) emittierten Lichtimpulse abstimmbar ist, und mit einem optischen Frequenzkonverter (FC) zur Konversion der Wellenlänge der Lichtimpulse in den sichtbaren Spektralbereich, wobei ein optischer Strecker (OS) vorgesehen ist, mittels welchem die Impulsdauer der frequenzkonvertierten Lichtimpulse auf mindestens 1 ps vergrößerbar ist
**dadurch gekennzeichnet, dass** die Konversion der Wellenlänge der Lichtimpulse mittels des Frequenzkonverters derart erfolgt, dass die Wellenlänge der Lichtimpulse im sichtbaren Spektralbereich abstimmbar ist.

2. Vorrichtung nach Anspruch 1, **dadurch gekennzeichnet, dass** der Frequenzkonverter (FC) einen oder mehrere Frequenzverdoppler umfasst.

3. Vorrichtung nach Anspruch 1, **gekennzeichnet durch** wenigstens ein optisches Frequenzfilter, das dem Frequenzkonverter (FC) entweder vor- oder nachgeschaltet ist.

4. Vorrichtung nach Anspruch 1, **dadurch gekennzeichnet, dass** die Wellenlänge der von dem Lasersystem (LS) emittierten Lichtimpulse wenigstens im Bereich zwischen 1 µm und 2 µm, vorzugsweise zwischen 800 nm und 2 µm. abstimmbar ist.

5. Vorrichtung nach Anspruch 1, **dadurch gekennzeichnet, dass** der optische Strecker (OS) durch wenigstens ein dispersives optisches Element gebildet wird, das dem Frequenzkonverter (FC) nachgeschaltet ist.

6. Vorrichtung nach Anspruch 1, **dadurch gekennzeichnet, dass** das Lasersystem zur Erzeugung der abstimmbaren Lichtimpulse eine nichtlineare optische Faser (3) aufweist, mittels welcher das optische Spektrum von Femtosekunden-Lichtimpulsen unter Ausnutzung solitonischer Effekte modifizierbar ist, wobei der nichtlinearen optischen Faser (3) ein optischer Kompressor (2) vorgeschaltet ist.

7. Vorrichtung nach Anspruch 6, **dadurch gekennzeichnet, dass** die in die nichtlineare optische Faser (3) eingekoppelten Lichtimpulse eine Impulsenergie von wenigstens einem Nanojoule haben.

8. Vorrichtung nach Anspruch 6, **dadurch gekennzeichnet, dass** der optische Kompressor (2) verstellbar ausgebildet ist, derart, dass der zeitliche Frequenzverlauf der in die nichtlineare optische Faser (3) eingekoppelten Lichtimpulse veränderbar ist.

9. Vorrichtung nach Anspruch 6, **dadurch gekennzeichnet, dass** die nichtlineare optische Faser (3) polarisationserhaltend und/oder dispersionsverschoben ist.

10. Vorrichtung nach Anspruch 6, **dadurch gekennzeichnet, dass** die nichtlineare optische Faser (3) einen Kerndurchmesser von weniger als fünf Mikrometem hat.

11. Vorrichtung nach Anspruch 6, **dadurch gekennzeichnet, dass** die nichtlineare optische Faser (3) als mikrostrukturierte photonische Faser ausgebildet ist.

12. Vorrichtung nach Anspruch 6, **dadurch gekennzeichnet, dass** die Länge der nichtlinearen optischen Faser (3) weniger als einen Meter beträgt.

13. Vorrichtung nach Anspruch 6, **gekennzeichnet durch** einen zusätzlichen optischen Kompressor (6), der der nichtlinearen optischen Faser (3) nachgeschaltet ist.

14. Verwendung einer Vorrichtung nach einem der Ansprüche 1 bis 13 für die Mikroskopie, die konfokale Mikroskopie, die Fluoreszenzspektroskopie oder die automatisierte Wirkstoffsuche.

## Claims

1. Apparatus for producing light pulses in the visible spectral range, comprising a laser system (LS) which emits femtosecond light pulses, that is to say light pulses of a duration of up to 1 ps, in the infrared spectral range, wherein the wavelength of the light pulses emitted by the laser system (LS) is tunable, and an optical frequency converter (FC) for conversion of the wavelength of the light pulses into the visible spectral range, wherein there is provided an optical stretcher (OS) by means of which the pulse duration of the frequency-converted light pulses can be increased to at least 1 ps, **characterised in that** conversion of the wavelength of the light pulses by means of the frequency converter is effected in such a way that the wavelength of the light pulses is tunable in the visible spectral range.

2. Apparatus according to claim 1 **characterised in that** the frequency converter (FC) includes one or more frequency doublers.

3. Apparatus according to claim 1 **characterised by** at least one optical frequency filter which is connected either upstream or downstream of the frequency converter (FC).

4. Apparatus according to claim 1 **characterised in that** the wavelength of the light pulses emitted by the laser system (LS) are tunable at least in the range of between 1 µm and 2 µm, preferably between 800 nm and 2 µm.

5. Apparatus according to claim 1 **characterised in that** the optical stretcher (OS) is formed by at least one dispersive optical element which is connected downstream of the frequency converter (FC).

6. Apparatus according to claim 1 **characterised in that** the laser system for producing the tunable light pulses has a non-linear optical fibre (3), by means of which the optical spectrum of femtosecond light pulses can be modified using solitonic effects, wherein an optical compressor (2) is disposed upstream of the non-linear optical fibre (3).

7. Apparatus according to claim 6 **characterised in that** the light pulses coupled into the non-linear optical fibre (3) have a pulse energy of at least one nanojoule.

8. Apparatus according to claim 6 **characterised in that** the optical compressor (2) is adapted to be adjustable in such a way that the variation in frequency in relation to time of the light pulses coupled into the non-linear optical fibre (3) is variable.

9. Apparatus according to claim 6 **characterised in that** the non-linear optical fibre (3) is polarisation-maintaining and/or dispersion-shifted.

10. Apparatus according to claim 6 **characterised in that** the non-linear optical fibre (3) has a core diameter of less than five micrometers.

11. Apparatus according to claim 6 **characterised in that** the non-linear optical fibre (3) is in the form of a microstructured photonic fibre.

12. Apparatus according to claim 6 **characterised in that** the length of the non-linear optical fibre (3) is less than one metre.

13. Apparatus according to claim 6 **characterised by** an additional optical compressor (6) which is arranged downstream of the non-linear optical fibre (3).

14. Use of an apparatus according to one of claims 1 to 13 for microscopy, confocal microscopy, fluorescence spectroscopy or automated high throughput screening.

## Revendications

1. Dispositif pour la production d'impulsions lumineuses dans la plage spectrale visible, avec un système laser (LS), qui émet des impulsions lumineuses de l'ordre de la femtoseconde, c'est-à-dire des impulsions lumineuses d'une durée allant jusqu'à 1 ps, dans la plage spectrale infrarouge, la longueur d'onde des impulsions lumineuses émises par le système laser (LS) pouvant être adaptée, et avec un convertisseur de fréquence (FC) optique pour la conversion de la longueur d'onde des impulsions lumineuses dans la plage spectrale visible, un dispositif d'étirement (OS) optique étant prévu, au moyen duquel la durée d'impulsion des impulsions lumineuses converties au niveau de la fréquence peut être augmentée jusqu'à au moins 1 ps,
**caractérisé en ce que** la conversion de la longueur d'onde des impulsions lumineuses s'effectue au moyen du convertisseur de fréquence de telle sorte que la longueur d'onde des impulsions lumineuses peut être adaptée dans la plage spectrale visible.

2. Dispositif selon la revendication 1, **caractérisé en ce que** le convertisseur de fréquence (FC) comprend un ou plusieurs doubleurs de fréquence.

3. Dispositif selon la revendication 1, **caractérisé par** au moins un filtre de fréquence optique, qui est monté en amont ou en aval du convertisseur de fréquence (FC).

4. Dispositif selon la revendication 1, **caractérisé en ce que** la longueur d'onde des impulsions lumineuses émises par le système laser (LS) peut être adaptée au moins dans la plage comprise entre 1 µm et 2 µm, de préférence entre 800 nm et 2 µm.

5. Dispositif selon la revendication 1, **caractérisé en ce que** le dispositif d'étirement optique (OS) est formé par au moins un élément optique dispersant, qui est monté en aval du convertisseur de fréquence (FC).

6. Dispositif selon la revendication 1, **caractérisé en ce que** le système laser présente pour la production des impulsions lumineuses adaptables une fibre (3) optique non linéaire, au moyen de laquelle le spectre optique d'impulsions lumineuses de l'ordre de la femtoseconde peut être modifié en utilisant des effets solitoniques, un compresseur (2) optique étant monté en aval de la fibre (3) optique non linéaire.

7. Dispositif selon la revendication 6, **caractérisé en ce que** les impulsions lumineuses injectées dans la fibre (3) optique non linéaire ont une énergie d'impulsion d'au moins un nanojoule.

8. Dispositif selon la revendication 6, **caractérisé en ce que** le compresseur (2) optique est conçu réglable de telle sorte que la variation de fréquence dans le temps des impulsions lumineuses injectées dans la fibre (3) optique non linéaire peut être modifiée.

9. Dispositif selon la revendication 6, **caractérisé en ce que** la fibre (3) optique non linéaire est conservatrice de la polarisation et/ou décalée en dispersion.

10. Dispositif selon la revendication 6, **caractérisé en ce que** la fibre (3) optique non linéaire a un diamètre de noyau d'au moins 5 microns.

11. Dispositif selon la revendication 6, **caractérisé en ce que** la fibre (3) optique non linéaire est conçue comme une fibre photonique microstructurée.

12. Dispositif selon la revendication 6, **caractérisé en ce que** la longueur de la fibre (3) optique non linéaire est inférieure à 1 m.

13. Dispositif selon la revendication 6, **caractérisé par** un compresseur (6) optique supplémentaire, qui est monté en aval de la fibre (3) optique non linéaire.

14. Utilisation d'un dispositif selon l'une quelconque des revendications 1 à 13 pour la microscopie, la microscopie à foyer commun, la spectroscopie de fluorescence ou la recherche automatisée d'agent actif.
